# EUROPEAN PATENT SPECIFICATION

(11) **EP 1 492 362 B1**
(45) Date of publication and mention of the grant of the patent: **28.11.2007**
(21) Application number: 04253771.2
(22) Date of filing: 24.06.2004
(51) Int. Cl.: H04Q 7/22

(54) **Apparatus and method for searching location information using various location detection technologies in a mobile communication terminal**
Vorrichtung und Verfahren zur Aufenthaltsortinformationssuche unter Verwendung unterschiedlicher Aufenthaltsortermittlungstechnologien in einem mobilen Kommunikationsendgerät
Dispositif et procédé de recherche d'information de localisation au moyen de technologies de détection de localisation diverses dans une station de communication mobile

(30) Priority: 24.06.2003 KR 2003041107
(43) Date of publication of application: 29.12.2004
(73) Proprietor: SAMSUNG ELECTRONICS CO., LTD., Suwon-si, Gyeonggi-do (KR)
(72) Inventor: Lee, Sang-man, Osan-si Gyeonggi-do (KR); Lee, Su-hyun, Dongjak-gu Seoul (KR); Choi, Eun-young, Seocho-gu Seoul (KR)
(74) Representative: Waddington, Richard

(56) References cited:
- EP-A- 1 126 376
- EP-A- 1 209 933
- EP-A- 1 301 057
- GIORDANO A ET AL: "A novel location-based service and architecture" PERSONAL, INDOOR AND MOBILE RADIO COMMUNICATIONS, 1995. PIMRC'95. WIRELESS: MERGING ONTO THE INFORMATION SUPERHIGHWAY., SIXTH IEEE INTERNATIONAL SYMPOSIUM ON TORONTO, ONT., CANADA 27-29 SEPT. 1995, NEW YORK, NY, USA,IEEE, US, vol. 2, 27 September 1995 (1995-09-27), pages 853-857, XP010150903 ISBN: 0-7803-3002-1

## Description

The present invention relates generally to an apparatus and method for searching for location information using various location detection technologies in a mobile communication terminal. More particularly, the invention relates to an apparatus and method of searching for location information using a mobile communication terminal, and converting the location information and some other information into a form supported by an application.

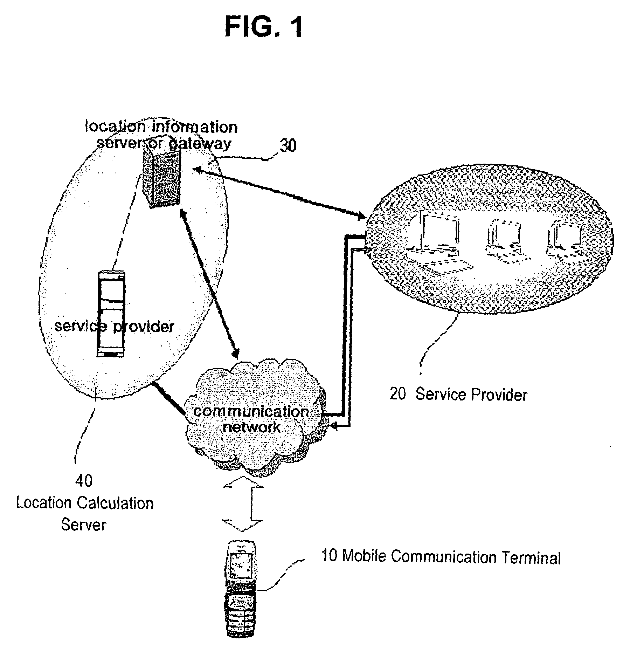

FIG. 1 is a schematic diagram showing the configuration of a conventional apparatus for searching for location information. In order to obtain current location information after an application is executed, the conventional location information searching apparatus uses two methods as described below.

In accordance with the first method, when the application of a mobile communication terminal 10, which is capable of accessing the wireless Internet and downloading information therefrom, requests location information from a service provider 20 that provides Location-Based Services (LBS), the service provider 20 transfers the request of the application to a location information server 30.

Thereafter, the location information server 30 searches for the location information of the mobile communication terminal 10 and provides searched location information to the service provider 20, and the service provider 20 transmits the searched location information provided by the location information server 30 to the application of the mobile communication terminal 10.

This conventional method is disadvantageous in that the application of the mobile communication terminal 10 can not directly connect with the location information server 30 of the mobile communication service . Further, in the case where a method of searching for location information is changed, the service provider 20 must provide a new application corresponding to the changed location information searching method.

In accordance with the second conventional method, when the application requests a search for location information from the location information server 30 after the service provider 10 obtains the right to use the location information server 30 based on an agreement with a mobile communication service provider, the location information server 30 requests the calculation of a location from a location calculation server 40. The location calculation server 40 calculates the current location of the mobile communication terminal 10 while communicating with the mobile communication terminal 10 and, thereafter, transmits the values of the calculated current location to the location information server 30.

Accordingly, the location information server 30 notifies the mobile communication terminal 10 and the service provider 20 of the transmitted information. The service provider 20 transmits a map corresponding to the location information to the mobile communication terminal 10.

This second conventional method is advantageous in that the application of the mobile communication terminal 10 directly connects with the location information server 30 of the mobile communication service provider. However, this method is also inconvenient in that, in the case where the mobile communication service provider changes a method of searching for location information, the service provider 20 must provide a new application corresponding to the changed location information searching method of the mobile communication service provider.

EP 1,209,922 A1 discloses a service gateway through which a mobile communications device can request position information.

EP 1,126,376 A1 discloses a centralised system for providing location information to cellular device users.

Accordingly, the present invention has been made keeping in mind the above problems occurring in the prior art.

An object of the present invention is to provide an apparatus and method for searching for location information using a mobile communication terminal.

According to the invention, an interface is provided which is capable of converting location information and some other information, which are both obtained in response to the request of a certain application, into a form supported by the application. The converted location information is then transmitted to the application. The converted information is transmitted to the application, when the application of a mobile communication terminal requests the location information and some other information.

The invention provides an interface capable of being shared by a plurality of applications, so that an application can obtain corresponding information without changing an application, even in the case where a method of searching for the location information of a mobile communication terminal is changed.

According to the present invention there is provided an apparatus and method as set forth in the appended independent claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a schematic diagram showing the configuration of a conventional apparatus for searching for location information;
FIG. 2 is a block diagram schematically illustrating an apparatus for searching for location information using various location detection technologies in a mobile communication terminal in accordance with the present invention;
FIG. 3 is a flowchart showing a method of searching for location information using various location detection technologies in a mobile communication terminal; and
FIG. 4 is a schematic diagram showing the internal configuration of an apparatus for searching for location information using various location detection technologies in a mobile communication terminal in accordance with an embodiment of the present invention.

Reference now should be made to the drawings, in which the same reference numerals are used throughout the different drawings to designate the same or similar components.

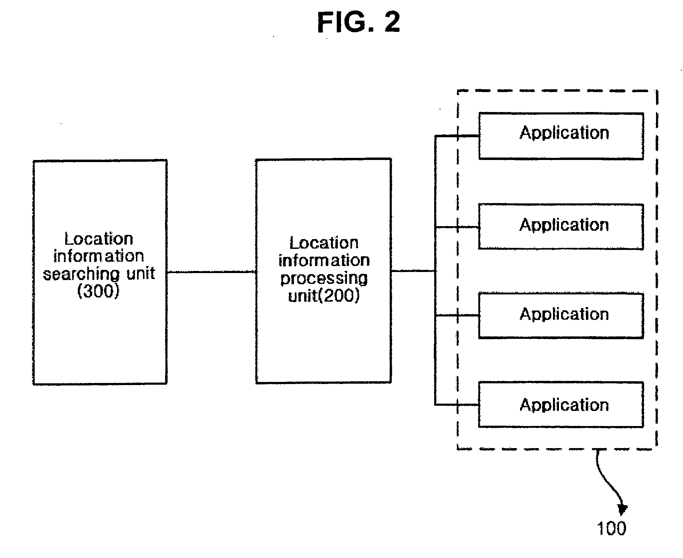

FIG. 2 is a block diagram schematically illustrating an apparatus for searching for location information using various location detection technologies in a mobile communication terminal in accordance with the present invention. The apparatus of FIG. 2 includes one or more applications 100, a location information processing unit 200 and a location information searching unit 300.

Each of the applications 100 performs a specific function according to specific settings. For example, one of the applications 100 requests a search for a location information service with respect to a specific location.

The location information processing unit 200 transfers the request for the search for the location information of a specific terminal, which is made by the application, to the location information searching unit 300, and transfers location information, which is received from the location information searching unit 300, to the application. In this case, the location information processing unit 200 converts the location information, which is received from the location information searching unit 300, into a form supported by the requesting application of applications 100, and transmits the converted location information to the requesting application.

The location information searching unit 300 requests a search for the location information of a specific mobile communication terminal from an external location information server (not shown), and includes a plurality of location searching modules for requesting and receiving location information and a LBS setting module for controlling the plurality of location searching modules. The location searching modules may be Data Burst Message (DBM) modules for providing location information using messages, wireless Internet modules for providing location information through wireless Internet accesses, or Global Positioning System (GPS) modules for providing location information by indicating the current locations of users and desired destinations on maps. The location information can be obtained using other types of location searching modules other than the above-described modules.

The LBS are services that combine the location of a mobile communication terminal with geographical information and peripheral information and provide the location of the mobile communication terminal together with the geographical information and the peripheral information. The LBS setting module stores information about the plurality of location searching modules and information about a location searching module set to a default. The LBS setting module can select one from the plurality of location searching modules and request a search for location information from the selected location searching module, or can request a search for location information from a location searching module designated by the application 100.

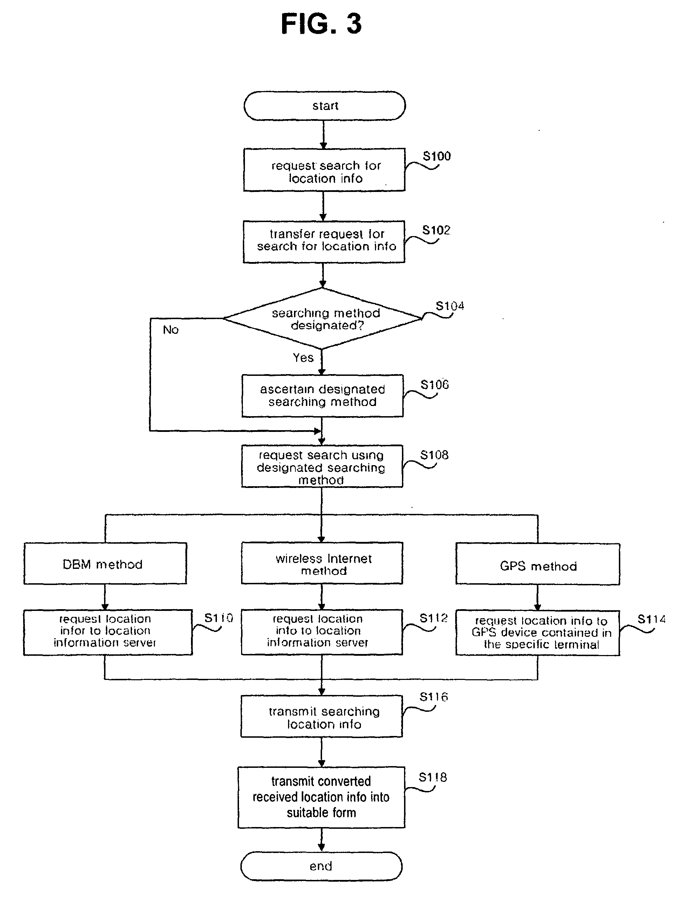

FIG. 3 is a flowchart showing a method of searching for location information using various location detection technologies in a mobile communication terminal. When application 100 requests the location information of a specific mobile communication terminal from the location information processing unit 200 at step S100, the location information processing unit 200 transfers the request of the application 100 to the location information searching unit 300 at step S102.

Thereafter, the location information searching unit 300 determines whether the location information processing unit 200 has designated a method of searching for the location information of the specific terminal when requesting the location information of the specific terminal at step S104.

If it is determined that the location information searching method has been designated, the LBS setting module ascertains the location information searching method at step S106, and requests the search for the location information of the specific terminal using the designated location information searching method from the external location information server at step S108. In this case, the location information searching method may be a DBM method, wireless Internet method or GPS method.

In the case where the designated location information searching method is the DBM method, the DBM module requests the search for the location information of the specific terminal from the external location information server using a DBM at step S110. The external location information server searches for the location information of the specific terminal and transmits location information searched for by the DBM method.

In the case where the designated location information searching method is the wireless Internet method, the wireless Internet module accesses the external location information server using the wireless Internet method and requests the search for the location information of the specific mobile communication terminal from the external location information server at step S112. The external location information server searches for the location information of the specific terminal and transmits searched location information to the wireless Internet module.

In the case where the designated location information searching method is the GPS method, the GPS module requests the search for the location information of the specific terminal from a GPS device contained in the specific terminal at step S114. The GPS device searches for the location information of the specific terminal using a satellite and transmits searched location information to the GPS module.

Thereafter, the location searching unit 300 transmits the received location information of the specific terminal to the location information processing unit 200 at step S116. The location processing unit 200 converts the location information, which is received from the location information searching unit 300, into a form supported by the application 100, and transmits the converted location information to the application at step S118.

If it is determined that the location information searching method has not been designated, the LBS setting module requests the search for the location information of the specific terminal through a certain location searching module at step S108. In this case, the LBS setting module ascertains some of the plurality of location searching modules that can allow current location information to be obtained, and sets one of the location searching modules to a default. For example, the LBS setting module may request the search for the location information of the specific terminal from the location searching module corresponding to the method by which the specific terminal is currently provided with a location information service, or it may select one of the plurality of location searching modules and request the search for the location information of the specific terminal from the selected location searching module.

Thereafter, when the LBS setting module receives the request for the search of the location information, the LBS setting module requests the location information of the specific terminal from the location searching module set to the default. The location searching module set to the default may be changed to some other location searching module according to a change in the method of searching for the location information.

Thereafter, the steps S110 to S118 are performed in the same manner as described above.

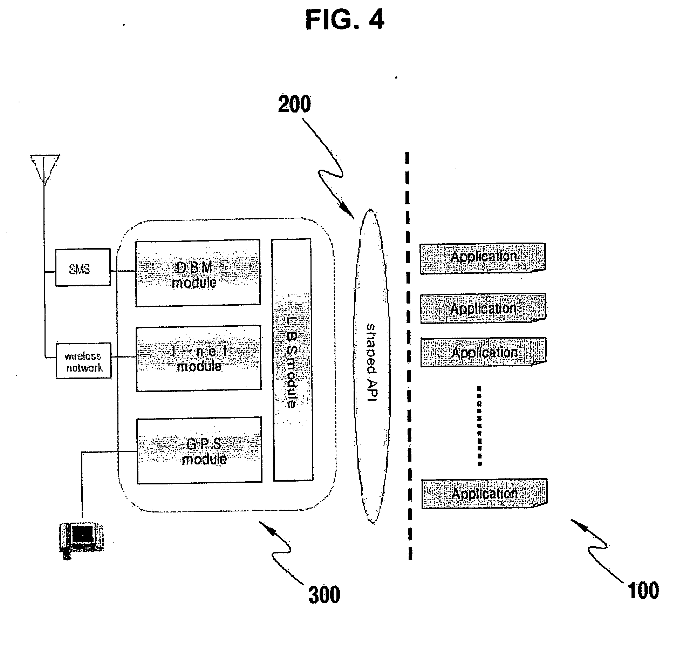

FIG. 4 is a schematic diagram showing the internal configuration of an apparatus for searching for location information using various location detection technologies in a mobile communication terminal in accordance with an embodiment of the present invention. When an application 100 requests location information of a specific communication terminal from a location information processing unit 200 (for example, a common Application Programming Interface (API)), the shared API transmits the request of the application 100 to the location information searching unit 300, and a LBS setting module selects one of a plurality of location searching modules and requests the location information of the specific terminal from the external location information server through the selected location searching module. In this case, the LBS setting module sets one of the plurality of location searching modules, which can currently search for the location information of the specific terminal, to a default, and requests the location information of the specific terminal from the location searching module. The plurality of location searching modules include at least DBM modules, wireless Internet modules and GPS modules.

For example, when a search for the location information of a specific terminal using the DBM method is requested, the LBS setting module requests the search for the location information of the specific terminal from the external location information server through the DBM module. The external location information server searches for the location information of the specific terminal, and transmits location information searched for by the DBM method to the DBM module.

When a search for the location information of a specific terminal using the wireless Internet method is requested, the LBS setting module requests the search for the location information of the specific terminal from the external location information server through the wireless Internet module. The external location information server searches for the location information of the specific terminal, and transmits location information searched for by the wireless Internet method to the DBM module.

When a search for the location information of the specific terminal using the GPS method is requested, the LBS setting module requests the search for the location information of the specific terminal from the GPS device positioned in the specific terminal through the GPS module. The GPS device searches for the location information of the specific terminal using a satellite, and transmits location information searched for by the GPS method to the GPS module.

Generally, when the application 100 requests a search for the location information of a specific terminal using a certain location searching method, the LBS setting module requests the search for the location information of the specific terminal using the certain location searching method.

Thereafter, the LBS setting module transmits received and searched location information to the shared API, and the shared API converts the location information, which is received from the LBS setting module, into a form supported by the application 100, and transmits the converted location information to the application 100.

With the above-described scheme, an application 100 can obtain desired information regardless of the methods of searching for the location information.

The present invention provides an interface capable of being shared by a plurality of applications, so that at least one of the applications can obtain relevant information without changing to a different application, even in the case where a method of searching for the location information of a mobile communication terminal is changed.

Additionally, in accordance with the present invention, location information is converted, as well as some other information, which are obtained in response to the request of a certain application. The information is converted into a form supported by the application, and transmitted to the application, so that the application can obtain relevant information.

Additionally, the application of a mobile communication terminal can obtain information required for location information services, so that the addition of equipment and functionality to a communication network is not necessary to support the location information services.

Although a few preferred embodiments have been shown and described, it will be appreciated by those skilled in the art that various changes and modifications might be made without departing from the scope of the invention, as defined in the appended claims.

## Claims

1. An apparatus for searching for location information using various location detection technologies in a mobile communication terminal, the apparatus comprising:
a location information searching unit (300) operable to request a search for location information of the mobile communication terminal from an external location information server, wherein the request is generated within an application (100) within the mobile communication terminal; and **characterised by** including
a location information processing unit (200) forming a part of the mobile communication terminal and being operable to transfer the request for the search for the location information of the mobile communication terminal to the location information searching unit (300), to convert received location information into a form supported by the application (100) and to transmit the received location information, which is received from the location information searching unit (300), to the application (100).

2. The apparatus as set forth in claim 1, wherein the location information searching unit (300) comprises:
a plurality of location searching modules operable to request and receive the location information; and
a Location-Based Services (LBS) setting server operable to control the plurality of location searching modules.

3. The apparatus as set forth in claim 2, wherein the LBS server is operable to store information about the plurality of location searching modules and information about a location searching module currently set as a default, and further operable to select one of the plurality of location searching modules, and request the search for the location information from the location searching module.

4. The apparatus as set forth in any preceding claim, wherein the location information processing unit (200) is operable to convert the location information, which is received from the location information searching unit (300), into a form supported by the application (100), and transmit the converted location information to the application (100).

5. A method of searching for location information of a mobile communication terminal using various location detection technologies, the method comprising:
requesting with an application (100) of the mobile communication terminal the location information of the mobile communication terminal from a location information processing unit (200) of the mobile communication terminal;
transferring with the location information processing unit (200) the request of the application to a location information searching unit (300);
requesting with the location information searching unit (300) the search for the location information of the mobile communication terminal received from the location information processing unit (200); and
converting the location information, which is received from the location information searching unit (300) with the location information processing unit (200), into a form supported by the application (100), and transmitting the converted location information to the application (100).

6. The method as set forth in claim 5, wherein the step of the application (100) requesting the location information of the mobile communication terminal from the location information processing unit (200) comprises:
designating with the application (100) a method of searching for the location information of the mobile communication terminal and requesting the search for the location information of the mobile communication terminal from an interface; and
transferring with the application (100) the method of searching for the location information of the mobile communication terminal to the location information searching unit (300).

7. The method as set forth in claim 5 or claim 6, wherein the step of the location information searching unit (300) requesting the search for the location information of the mobile communication terminal received from the location information processing unit (200) further comprises the location information searching unit (300) selecting one of a plurality of location searching modules and requesting the search for the location information of the mobile communication terminal from the selected location searching module.

8. The method as set forth in claim 7, wherein the selected location searching module is a module for requesting and receiving the location information of the mobile communication terminal using a Data Burst Message (DBM) method.

9. The method as set forth in claim 7, wherein the selected location searching module is a module for requesting and receiving the location information of the mobile communication terminal using a wireless Internet method.

10. The method as set forth in claim 7, wherein the selected location searching module is a module for requesting and receiving the location information of the mobile communication terminal using a Global Positioning System (GPS) method.

## Patentansprüche

1. Vorrichtung, zur Suche nach Standort-Informationen, wobei verschiedene Standort-Informations-Technologien in einem mobilen Kommunikations-Endgerät verwendet werden, worin die Vorrichtung umfasst:
eine Standort-Informations-Sucheinheit (300), die betriebsbereit ist, um eine Suche nach den Standort-Informationen des mobilen Kommunikations-Endgeräts von einem externen Standort-Informations-Server abzufragen, wobei die Abfrage innerhalb einer Anwendung (100) innerhalb des mobilen Kommunikations-Endgeräts erzeugt wird; und **dadurch gekennzeichnet ist, dass** sie Folgendes beinhaltet:
eine Standort-Informations-Zentraleinheit (200), die einen Teil des mobilen Kommunikations-Endgeräts bildet und die betriebsbereit ist, um die Abfrage für die Suche nach den Standort-Informationen des mobilen Kommunikations-Endgeräts an die Standort-Informations-Sucheinheit (300) zu übermitteln, um die empfangene Standort-Informationen in eine Form umzuwandeln, die durch die Anwendung (100) unterstützt wird, und um die empfangene Standort-Informationen an die Anwendung (100) zu übertragen, welche von der Standort-Informations-Sucheinheit (300) empfangen werden.

2. Vorrichtung, wie in Anspruch 1 dargelegt, worin die Standort-Informations-Sucheinheit (300) umfasst:
eine Vielzahl von Standort-Suchmodulen, die betriebsbereit sind, um die Standort-Informationen abzufragen und zu empfangen; und
einen Location-Based-Services (LBS)-Einstellungs-Server, der betriebsbereit ist, um die Vielzahl der Standort-Suchmodule zu steuern.

3. Vorrichtung, wie in Anspruch 2 dargelegt, worin der LBS-Server betriebsbereit ist, um Informationen über die Vielzahl der Standort-Suchmodule zu speichern und die Informationen über ein Standort-Suchmodul, das jetzt als eine Vorgabe eingestellt ist, und der weiterhin betriebsbereit ist, um eines aus der Vielzahl von Standort-Suchmodulen auszuwählen und die Suche nach den Standort-Informationen von dem Standort-Suchmodul abzufragen.

4. Vorrichtung, wie in einem vorstehenden Anspruch dargelegt ist, worin die Standort-Informations-Zentraleinheit (200) betriebsbereit ist, um die Standort-Informationen, welche von der Standort-Informations-Sucheinheit (300) empfangen werden, in eine Form umzuwandeln, die von der Anwendung (100) unterstützt wird, und um die umgewandelte Standort-Informationen zu der Anwendung (100) zu übertragen.

5. Verfahren, zur Suche nach der Standort-Informationen eines mobilen Kommunikations-Endgeräts, wobei verschiedene Standort-Bestimmungs-Technologien verwendet werden, wobei das Verfahren umfasst:
Abfragen der Standorts-Informationen des mobilen Kommunikations-Endgeräts mit einer Anwendung (100) des mobilen Kommunikations-Endgeräts von einer Standort-Informations-Zentraleinheit (200) des mobilen Kommunikations-Endgeräts;
Übermitteln der Abfrage der Anwendung zu einer Standort-Informations-Sucheinheit (300) mit der Standort-Informations-Zentraleinheit (200);
Abfragen der Suche nach den Standort-Informationen des mobilen Kommunikations-Endgeräts, die von der Standort-Informations-Zentraleinheit (200) empfangen werden, mit der Standort-Informations-Sucheinheit (300); und
Umwandeln der Standort-Informationen mit der Standort-Informations-Zentraleinheit (200), welche von der Standort-Informations-Sucheinheit (300) empfangen werden, in eine Form, die von der Anwendung (100) unterstützt wird, und Übertragen der umgewandelten Standort-Informationen auf die Anwendung (100).

6. Verfahren, wie in Anspruch 5 dargelegt, worin der Schritt der Anwendung (100), der die Standort-Informationen des mobilen Kommunikations-Endgeräts von der Standort-Informations-Zentraleinheit (200) abfragt, umfasst:
Bestimmen eines Verfahrens zur Suche nach der Standort-Informationen des mobilen Kommunikations-Endgeräts mit der Anwendung (100) und zum Abfragen der Suche nach den Standort-Informationen des mobilen Kommunikations-Endgeräts von einem Interface; und
Übermitteln des Verfahrens zur Suche nach den Standort-Informationen des mobilen Kommunikations-Endgeräts mit der Anwendung (100) an die Standort-Informations-Sucheinheit (300).

7. Verfahren, wie in Anspruch 5 oder Anspruch 6 dargelegt, worin der Schritt der Standort-Informations-Sucheinheit (300), die die Suche nach den Standort-Informationen des mobilen Kommunikations-Endgeräts abfragt, die von der Standort-Informations-Zentraleinheit (200) übertragen werden, das weiterhin die Standort-Informations-Sucheinheit (300) umfasst, die eines aus einer Vielzahl von Standort-Suchmodulen auswählt und die Suche nach den Standort-Informationen des mobilen Kommunikations-Endgeräts von dem ausgewählten Standort-Suchmodul abfragt.

8. Verfahren, wie in Anspruch 7 dargelegt, worin das ausgewählte Standort-Suchmodul ein Modul ist, um die Standort-Informationen des mobilen Kommunikations-Endgeräts abzufragen und zu empfangen, wobei ein Data-Burst-Message (DBM)-Verfahren verwendet wird.

9. Verfahren, wie in Anspruch 7 dargelegt, worin das ausgewählte Standort-Suchmodul ein Modul ist, um die Standort-Informationen des mobilen Kommunikations-Endgeräts abzufragen und zu empfangen, wobei ein drahtloses Internet-Verfahren verwendet wird.

10. Verfahren, wie in Anspruch 7 dargelegt, worin das ausgewählte Standort-Suchmodul ein Modul ist, um die Standort-Informationen des mobilen Kommunikations-Endgeräts abzufragen und zu empfangen, wobei ein Global-Positioning-System (Globales Positionsbestimmungssystem) (GPS)-Verfahren verwendet wird.

## Revendications

1. Dispositif pour rechercher des informations de localisation en utilisant diverses technologies de détection de localisation dans un terminal de communication mobile, le dispositif comportant :
une unité de recherche d'informations de localisation (300) opérationnelle pour demander une recherche d'informations de localisation du terminal de communication mobile à partir d'un serveur d'informations de localisation externe, la demande étant générée dans une application (100) dans le terminal de communication mobile, et **caractérisé en ce qu'**il inclut :
une unité de traitement d'informations de localisation (200) formant une partie du terminal de communication mobile et étant opérationnelle pour transférer la demande de la recherche des informations de localisation du terminal de communication mobile vers l'unité de recherche d'informations de localisation (300), pour convertir des informations de localisation reçues dans une forme supportée par l'application (100) et pour transmettre des informations de localisation reçues, qui sont reçues depuis l'unité de recherche d'informations de localisation (300), à l'application (100).

2. Dispositif selon la revendication 1, dans lequel l'unité de recherche d'informations de localisation (300) comporte :
une pluralité de modules de recherche de localisation opérationnels pour demander et recevoir les informations de localisation, et
un serveur d'établissement de Services Basé sur la Localisation (LBS) opérationnel pour commander la pluralité de modules de recherche de localisation.

3. Dispositif selon la revendication 2, dans lequel le serveur LBS est opérationnel pour mémoriser des informations concernant la pluralité de modules de recherche de localisation et des informations concernant un module de recherche de localisation actuellement défini par défaut, et de plus opérationnel pour sélectionner l'un de la pluralité de modules de recherche de localisation, et demander la recherche des informations de localisation par le module de recherche de localisation.

4. Dispositif selon l'une quelconque des revendications précédentes, dans lequel l'unité de traitement d'informations de localisation (200) est opérationnelle pour convertir les informations de localisation, qui sont reçues depuis l'unité de recherche d'informations de localisation (300), dans une forme supportée par l'application (100), et transmettre les informations de localisation converties à l'application (100).

5. Procédé de recherche d'informations de localisation d'un terminal de communication mobile en utilisant diverses technologies de détection de localisation, le procédé comportant les étapes consistant à :
demander à l'aide d'une application (100) du terminal de communication mobile les informations de localisation du terminal de communication mobile depuis une unité de traitement d'informations de localisation (200) du terminal de communication mobile,
transférer à l'aide de l'unité de traitement d'informations de localisation (200) la demande de l'application à une unité de recherche d'informations de localisation (300),
demander à l'aide de l'unité de traitement d'informations de localisation (200) la recherche des informations de localisation du terminal de communication mobile reçues depuis l'unité de traitement d'informations de localisation (200), et
convertir les informations de localisation, qui sont reçues depuis l'unité de recherche d'informations de localisation (300) à l'aide de l'unité de traitement d'informations de localisation (200), dans une forme supportée par l'application (100), et transmettre les informations de localisation converties à l'application (100).

6. Procédé selon la revendication 5, dans lequel l'étape de l'application (100) demandant les informations de localisation du terminal de communication mobile par l'unité de traitement d'informations de localisation (200) comporte les étapes consistant à :
désigner à l'aide de l'application (100) un procédé de recherche des informations de localisation du terminal de communication mobile et demander la recherche des informations de localisation du terminal de communication mobile depuis une interface, et
transférer à l'aide de l'application (100) le procédé de recherche des informations de localisation du terminal de communication mobile à l'unité de recherche d'informations de localisation (300).

7. Procédé selon la revendication 5 ou 6, dans lequel l'étape de l'unité de recherche d'informations de localisation (300) demandant la recherche des informations de localisation du terminal de communication mobile reçues depuis l'unité de traitement d'informations de localisation (200) comporte de plus la sélection par l'unité de recherche d'informations de localisation (300) de l'un d'une pluralité de modules de recherche de localisation et la demande de la recherche des informations de localisation du terminal de communication mobile par le module de recherche de localisation sélectionné.

8. Procédé selon la revendication 7, dans lequel le module de recherche de localisation sélectionné est un module servant à demander et recevoir les informations de localisation du terminal de communication mobile en utilisant un procédé de Message de Salves de Données (DBM).

9. Procédé selon la revendication 7, dans lequel le module de recherche de localisation sélectionné est un module servant à demander et recevoir les informations de localisation du terminal de communication mobile en utilisant un procédé d'Internet sans fil.

10. Procédé selon la revendication 7, dans lequel le module de recherche de localisation sélectionné est un module servant à demander et recevoir les informations de localisation du terminal de communication mobile en utilisant un procédé de Système de Positionnement Global (GPS).
